Europäisches Patentamt

European Patent Office

Office européen des brevets

(19)

(11) Veröffentlichungsnummer: **0 095 072**
**B1**

(12)

# EUROPÄISCHE PATENTSCHRIFT

(45) Veröffentlichungstag der Patentschrift:
28.01.87

(21) Anmeldenummer: 83104424.3

(22) Anmeldetag: 05.05.83

(51) Int. Cl.⁴: **H 02 J 7/10, H 02 M 3/335**

(54) **Elektronisches Schaltnetzteil.**

(30) Priorität: **17.05.82 DE 3218594**

(43) Veröffentlichungstag der Anmeldung:
**30.11.83 Patentblatt 83/48**

(45) Bekanntmachung des Hinweises auf die Patenterteilung:
**28.01.87 Patentblatt 87/5**

(84) Benannte Vertragsstaaten:
**AT BE CH DE FR GB IT LI LU NL SE**

(56) Entgegenhaltungen:
**EP - A - 0 030 026**
**EP - A - 0 030 276**
**DE - A - 2 751 578**

**ELECTRONICS, Band 51, Nr. 26, 21. Dezember 1978,
New York R.J. BOSCHERT "Flyback converters:
solid-state solution to low-cost switching power
supplies", Seiten 100-104**

(73) Patentinhaber: **Braun Aktiengesellschaft,
Rüsselsheimer Strasse 22, D-6000 Frankfurt/Main (DE)**

(72) Erfinder: **Bergk, Günther, Lahnstrasse 4,
D-6096 Raunheim (DE)**
Erfinder: **Schwarz, Gerhard, Eggestrasse 16,
D-5990 Altena 1 (DE)**

(74) Vertreter: **Einsele, Rolf, Braun Aktiengesellschaft
Postfach 1120 Frankfurter Strasse 145, D-6242 Kronberg
Taunus (DE)**

## Beschreibung

Gegenstand der Erfindung ist ein elektronisches Schaltnetzteil zur Stromversorgung eines Akkumulators und eines parallelschaltbaren elektrischen Verbrauchers aus einer Wechsel- oder Gleichspannungsquelle unterschiedlicher Spannungshöhe mit einem primär getakteten Sperrwandler, bei dem die Primärwicklung eines Übertragers in Reihe zu einem ersten Transistor und dessen Sekundärwicklung in Reihe zum Akkumulator und einer ersten Diode geschaltet ist, wobei die Basis des ersten Transistors sowohl über einen ersten Kondensator mit dem einen Wicklungsende der Sekundärwicklung des Übertragers in Verbindung steht, deren anderes Wicklungsende mit dem Akkumulator verbunden ist, als auch über einen ersten Widerstand mit dem einen Pol der Eingangsspannungsquelle und mit dem Kollektor eines zweiten Transistors verbunden ist, dessen Emitter an Massepotential gelegt ist, und wobei der Emitter des ersten Transistors sowohl über einen zweiten Widerstand und den Akkumulator mit Massepotential verbunden als auch über eine Zenerdiode an die Basis des zweiten Transistors angeschlossen ist.

Ein elektronisches Schaltnetzteil weitgehend gleicher Art ist aus der EP-AI-30 026 bekannt, das an verschiedenen Gleich- und Wechselspannungen sowie an verschiedenen Wechselstromfrequenzen ohne Umschaltung betrieben werden kann. Das bekannte Schaltnetzteil weist einen Sperrwandler auf, der einen Übertrager enthält, in Reihe zu dessen Primärwicklung die Kollektor-Emitter-Strecke eines ersten Transistors sowie eines an den Emitter des ersten Transistors angeschlossenen Emitterwiderstandes geschaltet ist. An die Sekundärwicklung des Übertragers ist die Reihenschaltung eines Widerstandes mit einem Kondensator sowie der Kollektor-Emitter-Strecke eines zweiten Transistors angeschlossen, wobei der Kollektor des zweiten Transistors mit der Basis des ersten Transistors verbunden ist. Ein parallel zur Kollektor-Basis-Strecke des ersten Transistors geschalteter Widerstand dient zum Einschalten des ersten Transistors, wobei infolge des durch die Primärwicklung des Übertragers fliessenden Stromes in der Sekundärwicklung des Übertragers eine Spannung induziert wird, die über den Widerstand und Kondensator an die Basis des ersten Transistors gelegt wird und einen steigenden Basisstrom zur Folge hat. Die damit bewirkte positive Rückkopplung führt zum vollständigen Einschalten des ersten Transistors.

Der Emitterwiderstand ist parallel zur Basis-Emitter-Strecke des zweiten Transistors geschaltet, so dass bei ansteigendem Strom durch die Primärwicklung des Übertragers die am Emitterwiderstand abfallende Spannung ansteigt bis ein Basisstrom durch den zweiten Transistor fliesst, der den zweiten Transistor einschaltet und die Basis des ersten Transistors bis auf einen geringen Kollektor-Emitter-Spannungsabfall an das mit dem Emitter des zweiten Transistors verbundene Massepotential legt. Damit wird der erste Transistor gesperrt. In der Sperrphase des Transistors fliessst die im Übertrager gespeicherte magnetische Energie über eine Diode und den Verbraucher, dem somit ein linear abfallender Ladestrom zugeführt wird. Ein negativer, abfallender Strom über den Rückkopplungswiderstand und Rückkopplungskondensator hält den ersten Transistor gesperrt bis die im Übertrager gespeicherte Energie abgeflossen ist. Erst wenn der Rückkopplungskondensator so weit entladen ist, dass der über den parallel zur Kollektor-Basis-Strecke des ersten Transistors geschalteten Widerstand fliessende Strom eine ausreichende Basisspannung aufbaut, kann der erste Transistor wieder eingeschaltet werden, so dass sich der Schwingvorgang entsprechend wiederholt.

Ist die am Schaltnetzteil anliegende Eingangsspannung gross genug, so erfolgt das Entladen bzw. Umladen des Rückkopplungskondensators in entsprechend kurzer Zeit, so dass bis zum Einschalten des ersten Transistors eine kurze Zeitspanne vergeht, d.h., dass das Impuls/Pausen-Verhältnis gross genug ist, um den Verbraucher mit genügend Leistung zu versorgen. Wenn bei gleichbleibender Entlade- bzw. Umlade-Zeitkonstante die Eingangsspannung abnimmt, wird das Impuls/Pausen-Verhältnis entsprechend kleiner. Unterhalb einer bestimmten Eingangsspannung wird dieses Impuls/Pausen-Verhältnis so klein, dass der Verbraucher nicht mehr mit der notwendigen Leistung versorgt werden kann.

Aufgabe der vorliegenden Erfindung ist es, ein elektronisches Schaltnetzteil zur Stromversorgung eines elektrischen Verbrauchers aus einer Wechsel- oder Gleichspannungsquelle zu schaffen, das auch bei einer niedrigen Eingangsspannung zumindest einen ausreichenden Erhaltungsladestrom in den Akkumulator fliessen lässt.

Diese Aufgabe wird erfindungsgemäss dadurch gelöst, dass die Basis des ersten Transistors über einen Rückkopplungswiderstand mit dem ersten Kondensator verbunden ist und dass an die Verbindung des Rückkopplungswiderstandes mit dem ersten Kondensator eine mit dem Akkumulator verbundene Entladeschaltung angeschlossen ist, über die die Ladung des in der Leitphase des ersten Transistors aufgeladenen ersten Kondensators in der Sperrphase des ersten Transistors abfliesst und die den ersten Kondensator ebenfalls in der Sperrphase des ersten Transistors auf eine positive Spannung an dem mit dem Rückkopplungswiderstand verbundenen Anschluss umlädt.

Die erfindungsgemässe Lösung ermöglicht den Einsatz des elektronischen Schaltnetzteils zum Laden eines Akkumulators auch bei sehr niedrigen Eingangsspannungen von z.B. 12 Volt.

Vorteilhafte Ausgestaltungen der erfindungsgemässen Lösung sind dadurch gekennzeichnet, dass die Entladeschaltung aus der Reihenschaltung eines mit dem Akkumulator verbundenen Entladewiderstandes mit einer kathodenseitig mit dem ersten Kondensator verbundenen Entladediode besteht bzw. dass die Entladeschaltung aus der Reihenschaltung eines Entladewiderstandes mit einer kathodenseitig mit dem ersten Kondensator verbundenen Entladediode besteht, dass der Entladewiderstand mit dem Kollektor eines dritten Transistors verbunden ist, dessen Emitter an den Akkumulator angeschlossen ist und dessen Basis über einen dritten Widerstand einerseits über eine zweite Diode mit dem einen Wicklungsende der Sekundärwicklung des Übertragers und andererseits über eine dritte Diode mit der Basis des ersten Transistors verbunden ist und dass der Kollektor des dritten Transistors über einen vierten Widerstand mit der Basis des zweiten Transistors verbunden ist.

Beide Ausgestaltungen stellen sicher, dass der Rückkopplungskondensator schneller umgeladen wird, indem über die Entladeschaltung an den mit dem Rückkopplungswiderstand verbundenen Anschluss des Rückkopplungskondensators eine positive Spannung gelegt wird, die nach Beendigung der Sperrphase zum schnellen Wiedereinschalten des ersten Transistors führt.

Eine weitere vorteilhafte Ausgestaltung der erfindungsgemässen Lösung ist dadurch gekennzeichnet, dass parallel zum Entladewiderstand eine kathodenseitig mit der Anode der Entladediode verbundene Leuchtdiode vorgesehen ist. Diese Ausgestaltung bietet die zusätzliche Möglichkeit, den Ladezustand des Akkumulators anzuzeigen.

Eine weitere Ausgestaltung ist dadurch gekennzeichnet, dass die Entladeschaltung aus der Reihenschaltung eines Entladewiderstandes mit einer kathodenseitig mit dem ersten Kondensator verbundenen Entladediode besteht, dass der Entladewiderstand mit dem Kollektor eines dritten Transistors verbunden ist, dessen Emitter an den Akkumulator angeschlossen ist, dessen Basis sowohl über einen dritten Widerstand einerseits über eine zweite Diode mit dem einen Wicklungsende der Sekundärwicklung des Übertragers und andererseits über eine dritte Diode mit der Basis des ersten Transistors als auch über einen fünften Widerstand und eine kathodenseitig mit dem fünften Widerstand verbundene fünfte Diode mit dem Akkumulator verbunden ist und dessen Kollektor über einen vierten Widerstand mit der Basis des zweiten Transistors verbunden ist.

Diese Ausgestaltung ermöglicht es, dass unter Berücksichtigung der Akkumulatorspannung, d.h. des Ladezustandes des Akkumulators, die Fluss- und Sperrphasen des ersten Transistors so beeinflusst werden, dass ein möglichst optimaler Ladezustand des Akkumulators gewährleistet wird, indem bei geringer Ladung des Akkumulators möglichst viel Leistung an den Akkumulator abgegeben wird, d.h. ein grosser Ladestrom in den Akkumulator fliesst, während bei ausreichendem Ladezustand des Akkumulators ein geringerer Erhaltungsladestrom in den Akkumulator fliesst.

Anhand eines in der Zeichnung dargestellten Ausführungsbeispiels soll der der Erfindung zugrundeliegende Gedanke näher erläutert werden. Es zeigen:

Figur 1 ein Schaltbild eines elektronischen Schaltnetzteiles mit einer Steuer- und Regelelektronik zur Schnellladung eines Akkumulators mit automatischem Übergang auf eine Erhaltungsladung,

Figur 2 eine Schaltungsanordnung gemäss Fig. 1, mit einer Blinkanzeige bei Übergang vom Schnelladezustand in den Erhaltungsladezustand und

Figur 3 eine Schaltungsanordnung gemäss Fig. 1, mit einer Wicklungsanzapfung der Sekundärwicklung.

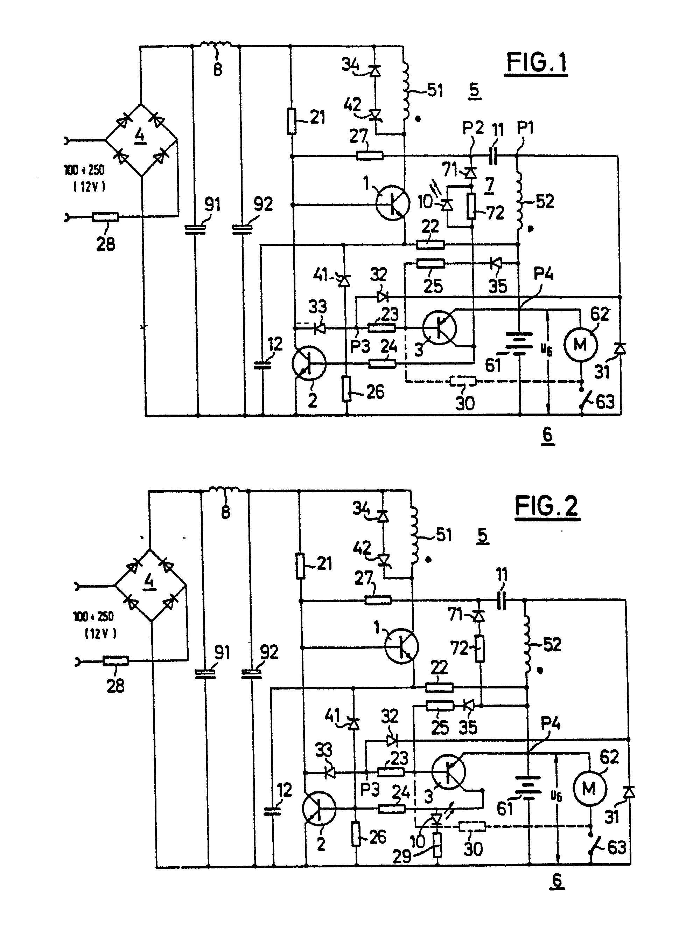

In Figur 1 ist ein elektronisches Schaltnetzteil dargestellt, das aus einem primär getakteten Sperrwandler mit einem Übertrager 5 und einem ersten Transistor 1 sowie einer im Lastkreis vorgesehenen ersten Diode 31 besteht. Der Sperrwandler wird über eine Gleichrichter-Brückenschaltung 4 und einen Widerstand 28 aus einem Gleich- oder Wechselspannungsnetz gespeist, dessen Spannung zwischen 100 und 250 Volt, im Extremfall aber auch 12 Volt, und dessen Frequenz im Falle eines speisenden Wechselspannungsnetzes nahezu beliebig sein kann. Die gleichgerichtete Ausgangsspannung wird über eine Sieb- und Glättungsanordnung, bestehend aus einer Längsdrossel 8 und zwei Glättungskondensatoren 91, 92, an den Eingang des Sperrwandlers bzw. der Steuer- und Regelelektronik gelegt.

Parallel zu den Gleichspannungsklemmen ist die Reihenschaltung der Primärwicklung 51 des Übertragers 5 mit der Kollektor-Emitter-Strecke des ersten Transistors 1 und eines Kondensators 12 geschaltet. An die Basis des ersten Transistors 1 ist ein erster Widerstand 21 angeschlossen, der über die Längsdrossel 8 mit dem positiven Pol der Eingangsspannungsklemme verbunden ist. Darüber hinaus ist die Basis des ersten Transistors 1 über die Kollektor-Emitter-Strecke eines zweiten Transistors 2 mit Masse- oder Bezugspotential verbunden. Der Emitter des ersten Transistors 1 ist an die Kathode einer ersten Zenerdiode 41 angeschlossen, deren Anode sowohl mit der Basis des zweiten Transistors 2 als auch über einen Widerstand 26 mit Masse- oder Bezugspotential verbunden ist. Darüber hinaus ist der Emitter des ersten Transistors 1 über einen zweiten Widerstand 22 an ein Wicklungsende der Sekundärwicklung 52 des Übertragers 5 angeschlossen. Der Wickelsinn der Primär- und Sekundärwicklung des Übertragers 5 ist durch die eingetragenen Punkte angedeutet.

Ein Rückkopplungs-Kondensator 11 ist über einen Rückkopplungswiderstand 27 mit der Basis des ersten Transistors 1 und unmittelbar mit dem einen Wicklungsende der Sekundärwicklung 52 des Übertragers 5 verbunden. An das andere Wicklungsende der Sekundärwicklung 52 ist sowohl der Verbraucher 6, bestehend aus der Parallelschaltung eines Akkumulators 61 mit der Reihenschaltung eines Schalters 63 und eines Gleichstrommotors 62, als auch die Anode einer Diode 35 angeschlossen, zu der in Reihe ein mit der Basis eines dritten Transistors 3 verbundener Widerstand 25 geschaltet ist.

An die Verbindung des dritten Widerstandes 23 mit der dritten Diode 33 ist anodenseitig eine zweite Diode 32 angeschlossen, deren Kathode an das eine Wicklungsende der Sekundärwicklung 52 ebenso angeschlossen ist wie die Kathode der ersten Diode 31, die anodenseitig mit dem Verbraucher 6 verbunden ist.

Der Rückkopplungskondensator 11 ist zusätzlich mit einer Entladeschaltung 7 verbunden, die aus der Reihenschaltung eines Entladewiderstandes 72 und einer Entladediode 71 besteht, die kathodenseitig mit dem Rückkopplungskondensator 11 verbunden ist. Der Entladewiderstand 72 ist an dem Kollektor des dritten Transistors 3 angeschlossen, dessen Emitter mit dem anderen Wicklungsende der Sekundärwicklung 52 bzw. mit dem Verbraucher 6 verbunden ist.

Zur Begrenzung der Rückschlagspannung ist parallel zur Primärwicklung 51 des Übertragers 5 eine Schaltung vorgesehen, die aus der Reihenschaltung einer Zenerdiode 42 mit einer vierten Diode 34 besteht, die anodenseitig miteinander verbunden sind.

Wahlweise kann die Basis des dritten Transistors 3 über einen weiteren Widerstand 30 an die Verbindung des Gleichstrommotors 62 mit dem Schalter 63 angeschlossen werden. Diese Verbindungsmöglichkeit ist in Fig. 1 gestrichelt eingetragen.

Nachstehend soll die Funktionsweise der Schaltungsanordnung gemäss Fig. 1 näher erläutert werden.

Nach der Gleichrichtung mittels der Gleichrichter-Brückenschaltung 6 und Siebung bzw. Glättung mittels der Längsdrossel 8 und der Querkondensatoren 91, 92 wird der als Schalttransistor arbeitende erste Transistor 1 über den ersten Widerstand 21 mit einem geringen Basisstrom angesteuert. Infolge des einschaltenden ersten Transistors 1 entsteht über die Schaltstrecke des ersten Transistors 1 und die Primärwicklung 51 des Übertragers 5 ein Mitkopplungseffekt, durch den der erste Transistor 1 zusätzlich angesteuert und in den leitenden Zustand geschaltet wird. Der Kollektorstrom steigt linear an und erzeugt am zweiten Widerstand 22 eine proportionale Spannung. Beim Erreichen eines bestimmten Spitzenstromwertes wird über die erste Zenerdiode 41 der zweite Transistor 2 angesteuert, gelangt dadurch in den leitenden Zustand und verbindet die Basis des ersten Transistors 1 mit Bezugspotential bzw. Masse und entzieht damit dem ersten Transistor 1 den Basisstrom, woraufhin der erste Transistor 1 sperrt. Mit Beginn der Sperrphase wechselt die Polarität der in der Sekundärwicklung 52 des Übertragers 5 induzierten Spannung am Anschlusspunkt P1 des Rückkopplungskondensators 11. Die im Übertrager 5 gespeicherte Energie wird damit nach dem Prinzip des Sperrwandlers über die erste Diode 31 an den Verbraucher 6 abgegeben.

Während des Umschwingvorganges des Übertragers 5 begrenzen die Diode 34 sowie die Zenerdiode 42 parallel zur Primärwicklung 51 des Übertragers 5 die Rückschlagsspannungsspitze während der Sperrphase.

Die während der gesamten Übertrager-Entladephase entstehende negative Spannung am Punkt P1 gelangt über die zweite Diode 32 an den Verbindungspunkt P3, d.h. an die Verbindung zwischen der dritten Diode 33 und dem dritten Widerstand 23 im Basisstromkreis des dritten Transistors 3. Infolge dieser negativen Spannung schaltet der als PNP-Transistor ausgeführte dritte Transistor 3 in den leitenden Zustand.

Im Leitzustand des ersten Transistors 1 wurde der Rückkopplungskondensator 11 über den Widerstand 27 auf die Spannung

$$U_{C11} = U_{sek.} \cdot (1-e^{-t/\tau})$$

aufgeladen, wobei sich am Punkt P2 des Rückkopplungskondensators 11 eine negative Polarität ausbildete.

Diese Ladung mit negativer Polarität am Punkt P2 fliesst bei geöffnetem dritten Transistor 3 über die Entladeschaltung 7, d.h. über die Entladediode 71, den Entladewiderstand 72 sowie die parallel zum Entladewiderstand 72 geschaltete Leuchtdiode 10 über die durchgeschaltete Kollektor-Emitter-Strecke des dritten Transistors 3 zum Punkt P4, d.h. an den Pluspol des Akkumulators 61 ab.

Mit der Entladung des Rückkopplungskondensators 11 und anschliessender Umladung wird somit die Leuchtdiode 10 als Betriebsanzeige angesteuert. Dabei gewährleistet der parallel geschaltete Entladewiderstand 72 auch die Umladung unterhalb der Flussspannung der Leuchtdiode 10.

Die Spannung am umgeladenen Rückkopplungskondensator 11 beträgt:

$$U_{C11} = U_6 \, (= U_{Batt}) - U_{F31} - U_{CEsatT3} + U_{F71}$$

Dabei bedeutet $U_{C11}$ die Spannung am umgeladenen Rückkopplungskondensator 11, $U_6$ die Spannung am Verbraucher 6, $U_{F71}$ den Spannungsabfall an der Entladediode 71. $U_{CEsatT3}$ die Kollektor-Emitter-Sättigungsspannung des dritten Transistors 3 und $U_{F31}$ den Spannungsabfall an der ersten Diode 31.

Die Kollektor-Emitter-Sättigungsspannung des dritten Transistors 3 ist am Ende des Umladevorganges des Rückkopplungskondensators vernachlässigbar. Die Durchlass-Spannungsabfälle an der Entladediode 71 und der ersten Diode 31 sind nahezu gleich, da es sich um etwas baugleiche Dioden handelt, und können daher gegeneinander gekürzt werden, so dass die Spannung am umgeladenen Rückkopplungskondensator 11 der Verbraucherspannung $U_6$ mit positivem Vorzeichen am Punkt P2 entspricht.

Diese umgepolte Spannung am umgeladenen Rückkopplungskondensator 11 und am Verbraucher 6 ist deshalb von Bedeutung, weil die positive Spannung am Punkt P2 auch bei sehr niedriger Betriebsspannung von zum Beispiel 12 Volt ein sofortiges Wiedereinschalten des ersten Transistors 1 gewährleistet, wenn nach Beendigung der Übertrager-Entladephase der aus dem zweiten und dritten Transistor gebildete Spannungskomparator infolge der noch nicht erreichten Ausgangsspannung am Punkt P4 in den Sperrzustand kippt.

Wenn die Ausgangsspannung $U_6$ ihren Sollwert erreicht hat oder diesen Sollwert überschreitet, dann bleiben der zweite und dritte Transistor 2, 3 im leitenden Zustand und der erste Kondensator 11 ist am Punkt P1 über die Sekundärwicklung 52 des Übertragers 5 galvanisch mit dem Pluspol des Verbrauchers 6 und am Punkt P2 über den Widerstand 27 und den durchgeschalteten zweiten Transistor 2 mit Masse- bzw. Bezugspotential verbunden. Damit wird der Anschlusspunkt P2 des Rückkopplungskondensators 11 gegenüber dem Anschlusspunkt P1 erneut negativ. Die Grösse dieser negativen Spannung wird von der Entladediode 71, der Leuchtdiode 10 bzw. dem Entladewiderstand 72 und dem Rückkopplungs-Widerstand 27 bestimmt. Der durchgeschaltete Spannungskomparator, d.h. der durchgeschaltete zweite und dritte Transistor 2, 3 verhindert solange die Wiedereinschaltung des ersten Transistors 1, bis die Verbraucherspannung $U_6$ den vorgegebenen Sollwert unterschreitet und damit der Komparator, d.h. der zweite und dritte Transistor 2, 3 in den Sperrzustand kippen. Im gesperrten Zustand des zweiten und dritten Transistors 2, 3 erfolgt wiederum eine Aufladung des Rückkopplungskondensators 11 über den ersten Widerstand 21 sowie den Rückkopplungswiderstand 27 auf den summierten Spannungswert der Verbraucherspannung $U_6$ und der Basis-Emitter-Spannung des ersten Transistors 1. Die dritte Diode 33 entkoppelt dabei für diesen Vorgang den aus dem dritten und fünften Widerstand 23 bzw. 25 gebildeten Spannungsteiler vom ersten Widerstand 21. Die Diode 35, die vorzugsweise als Germaniumdiode ausgeführt ist, dient dazu, den Spannungsverlauf des Akkumulators in Abhängigkeit von der Temperatur durch die Elektronik-Schaltung nachzubilden.

Schaltet man den gestrichelt eingetragenen Widerstand 30 einerseits an die Verbindung des dritten Widerstandes 23 mit der Basis des dritten Transistors 3 und andererseits an die Verbindung des Motorschalters 63 mit dem Gleichstrommotor 62, so kann ohne einen zusätzlichen Schalter der aus dem dritten Widerstand 23 und fünften Widerstand 25 gebildete Spannungsteiler beim Einschalten des Gleichstrommotors 62 auf einen niedrigeren Ausgangsspannungspegel, z.B. von 2,9 Volt auf 2,6 Volt, gebracht werden. Damit wird erreicht, dass sich erst dann wieder ein grösserer Ausgangsstrom einstellt, wenn durch die Belastung oder den Verbrauch die niedrigere, mittlere Akkumulatorspannung unterschritten wird. Der Gleichstrommotor 62 läuft dann bei Netzbetrieb nicht ständig mit der hohen Ladeschlussspannung des Akkumulators 61. Nach dem Abschalten des Gleichstrommotors 62 erfolgt sofort eine schnelle Nachladung des Akkumulators 61.

Wie aus dieser Beschreibung der Funktionsweise der erfindungsgemässen Schaltungsanordnung deutlich wir, ist mit geringem Bauteilaufwand möglich, den hohen Schnelladestrom des Akkumulators 61 bei Annäherung bzw. Erreichen des durch die Beschaltung des aus dem zweiten und dritten Transistor 2, 3 gebildeten Spannungskomparators auf einen geringen Erhaltungsladestrom für den Akkumulator 61 zu reduzieren. Dabei erfolgt die Messung der Akkumulatorspannung nicht während des hohen in den Akkumulator 61 hineinfliessenden Ladestromes, sondern lediglich bei geringer Belastung. Dadurch werden die durch unterschiedliche Innenwiderstände der einzelnen Zellen des Akkumulators 61 verursachten Fehler vermieden. Dadurch, dass die Spannung des umgeladenen ersten Kondensators in etwa gleich der Verbraucherspannung ist, kann eine Normalladung mit einem Dauerlade-Nennstrom von ca. 40 bis 50 Milliampère auch bei niedriger Betriebsspannung von z.B. 12 Volt durchgeführt werden. Schliesslich ist gewährleistet, dass die Steuer- und Regelelektronik zur Schnell- bzw. Dauerladung bei gezogenem Netzstecker keinen Strom aus dem Akkumulator 61 verbraucht, da über die Spannungskomparatorschaltung bzw. über den Sperrwandler kein Stromfluss möglich ist.

Die in Fig. 2 dargestellte Variante entspricht weitestgehend der in Fig. 1 dargestellten Steuer- und Regelelektronik für ein elektronisches Schaltnetzteil. Gleiche Bauelemente sind in dieser Schaltungsanordnung ebenfalls mit gleichen Bezugsziffern versehen und insoweit wird auf die Beschreibung des ersten Ausführungsbeispieles Bezug genommen. Unterschiede dieser Schaltungsanordnung gegenüber der Schaltungsanordnung nach Fig. 1 bestehen darin, dass zum einen die Leuchtdiode 10 nicht parallel zum Entladewiderstand 72 sondern in den Kollektorkreis des dritten Transistors 3 eingefügt, anodenseitig mit dem Kollektor des dritten Transistors 3 verbunden und kathodenseitig über einen Vorwiderstand 29 an Masse- bzw. Bezugspotential angeschlossen ist, und zum anderen die Entladeschaltung 7 nicht mehr mit dem Kollektor des dritten Transistors 3, sondern unmittelbar an die Verbindung der Sekundärwicklung 52 des Übertragers 5 mit dem Verbraucher 6 angeschlossen ist.

In dieser Schaltungsvariante beginnt die Leuchtdiode 10 bei der Beendigung des Schnelladevorganges bzw. dem Übergang auf den Erhaltungsladevorgang zu blinken, weil bei erreichter Ausgangsspannung die Leuchtdiode 10 an den Akkumulator 61 angeschaltet ist. Durch die relativ hohe Stromentnahme der Leuchtdiode 10 sinkt die Akkumulatorspannung schnell unter den eingestellten Sollwert $U_A$ bzw. den maximalen Akkumulator-Spannungswert, so dass der aus dem zweiten und dritten Transistor 2, 3 gebildete Komparator wieder in den Sperrzustand kippt. Daraufhin liefert die Sperrwandlerschaltung über den Schalttransistor 1 erneut die von der Leuchtdiode 10 entnommene Energie nach, bis wiederum der Sollwert der Komparatorspannung erreicht ist. Dieser Vorgang wiederholt sich etwa im 2 Hz Rhythmus und zeigt damit an, dass die Schaltung in den Erhaltungsladezustand übergeht.

Die maximale Batteriespannung beträgt bei dieser Anordnung wie bei der Anordnung nach Fig. 1.

$$U_{Battmax} = U_6 = \left(\frac{R23+R25}{R25}\right) \cdot (U_{BE\ T3} - U_{F35}) + U_{F33} + U_{CEsatT_2}$$

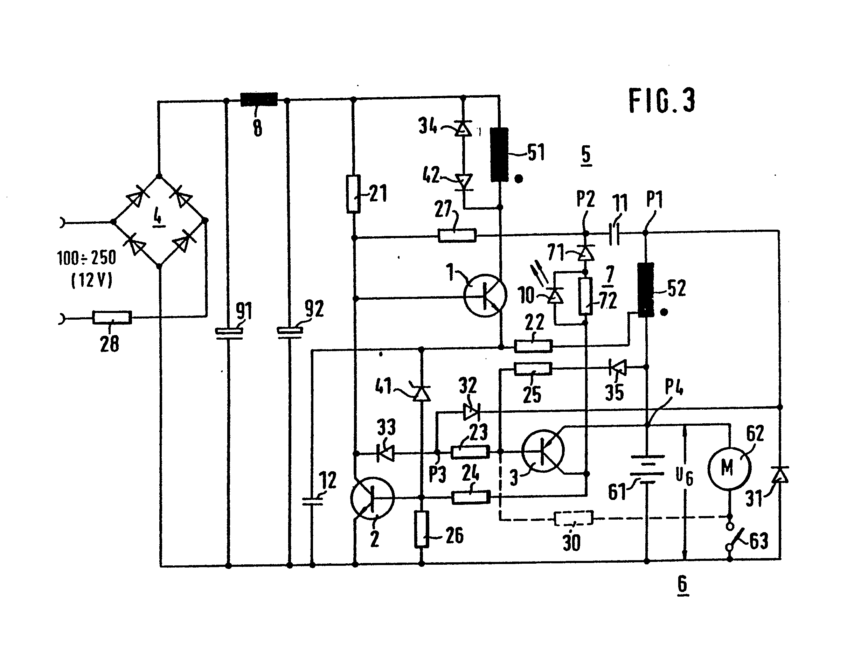

Die in Fig. 3 dargestellte Variante entspricht in ihren Einzelheiten der Schaltungsanordnung gemäss Fig. 1, weist jedoch abweichend von der Anordnung gemäss Fig. 1 einen Anschluss des zweiten Widerstandes 22 an einer Anzapfung der Sekundärwicklung 52 des Übertragers 5 auf. In der Einschaltphase des ersten Transistors 1 entsteht damit an der Anzapfung der Sekundärwicklung 52 eine positive Spannung, die elektrisch in Reihe mit der Spannung des Akkumulators 61 geschaltet ist. Die an dieser Anzapfung sich proportional zur Betriebsspannung ändernde Gegenspannung bewirkt eine Änderung des Spitzenstromes des ersten Transistors 1 und damit eine Linearisierung des Sekundärstromes bzw. der Leistung über den gesamten Betriebsspannungsbereich. Dies erfolgt unabhängig von der Art des Abschaltens des ersten Transistors 1.

Bei der in Fig. 3 dargestellten Anordnung erfolgt die Abschaltung des ersten Transistors 1 dann, wenn der linear ansteigende Strom am zweiten Widerstand 22 die Spannung

$$U = U_{z41} + U_{BET2}$$

erzeugt. Ist diese Bedingung erfüllt, so wird der zweite Transistor 2 angesteuert und entzieht dem ersten Transistor 1 den Basisstrom, worauf dieser in den Sperrzustand kippt.

## Patentansprüche

1. Elektronisches Schaltnetzteil zur Stromversorgung eines Akkumulators (61) und eines parallelschaltbaren elektrischen Verbrauchers (62) aus einer Wechsel- oder Gleichspannungsquelle unterschiedlicher Spannungshöhe mit einem primär getakteten Sperrwandler, bei dem die Primärwicklung (51) eines Übertragers (5) in Reihe zu einem ersten Transistor (1) und dessen Sekundärwicklung (52) in Reihe zum Akkumulator (61) und einer ersten Diode (31) geschaltet ist, wobei die Basis des ersten Transistors (1) sowohl über einen ersten Kondensator (11) mit dem einen Wicklungsende der Sekundärwicklung (52) des Übertragers (5) in Verbindung steht, deren anderes Wicklungsende mit dem Akkumulator (61) verbunden ist, als auch über einen ersten Widerstand (21) mit dem einen Pol der Eingangsspannungsquelle und mit dem Kollektor eines zweiten Transistors (2) verbunden ist, dessen Emitter an Massepotential gelegt ist, und wobei der Emitter des ersten Transistors (1) sowohl über einen zweiten Widerstand (22) und den Akkumulator (61) mit Massepotential verbunden als auch über eine Zenerdiode (41) an die Basis des zweiten Transistors (2) angeschlossen ist, und wobei ferner die Basis des ersten Transistors (1) über einen Rückkopplungswiderstand (27) mit dem ersten Kondensator (11) verbunden ist und an die Verbindung des Rückkopplungswiderstandes (27) mit dem ersten Kondensator (11) eine mit dem Akkumulator (61) verbundene Entladeschaltung (7) angeschlossen ist, über die die Ladung des in der Leitphase des ersten Transistors (1) aufgeladenen ersten Kondensators (11) in der Sperrphase des ersten Transistors (1) abfliesst und die den ersten Kondensator (11) ebenfalls in der Sperrphase des ersten Transistors (1) auf eine positive Spannung an dem mit dem Rückkopplungswiderstand (27) verbundenen Anschluss umlädt.

2. Elektronisches Schaltnetzteil nach Anspruch 1, dadurch gekennzeichnet, dass die Entladeschaltung (7) aus der Reihenschaltung eines mit dem Akkumulator (61) verbundenen Entladewiderstandes (72) mit einer kathodenseitig mit dem ersten Kondensator (11) verbundenen Entladediode (71) besteht (Fig. 2).

3. Elektronisches Schaltnetzteil nach Anspruch 1, dadurch gekennzeichnet, dass die Entladeschaltung (7) aus der Reihenschaltung eines Entladewiderstandes (72) mit einer kathodenseitig mit dem ersten Kondensator (11) verbundenen Entladediode (71) besteht, dass der Entladewiderstand (72) mit dem Kollektor eines dritten Transistors (3) verbunden ist, dessen Emitter an den Akkumulator (61) angeschlossen ist, dessen Basis sowohl über einen dritten Widerstand (23) einerseits über eine zweite Diode (32) mit dem einen Wicklungsende der Sekundärwicklung (52) des Übertragers (5) und andererseits über eine dritte Diode (33) mit der Basis des ersten Transistors (1) als auch über einen fünften Widerstand (25) und eine kathodenseitig mit dem fünften Widerstand (25) verbundene fünfte Diode (35) mit dem Akkumulator (61) verbunden ist und dessen Kollektor über einen vierten Widerstand (24) mit der Basis des zweiten Transistors (2) verbunden ist.

4. Elektronisches Schaltnetzteil nach Anspruch 2 oder 3, dadurch gekennzeichnet, dass parallel zum Entladewiderstand (72) eine kathodenseitig mit der Anode der Entladediode (71) verbundene Leuchtdiode (10) vorgesehen ist.

5. Elektronisches Schaltnetzteil nach einem der vorstehenden Ansprüche, dadurch gekennzeichnet, dass der Emitter des ersten Transistors (1) über den zweiten Widerstand (22) an eine Anzapfung der Sekundärwicklung (52) des Übertragers (5) angeschlossen ist (Fig. 3).

## Claims

1. An electronic switching power supply for supplying current to an accumulator (61) and an electrical load (62) which can be connected in parallel, from an alternating or direct voltage source of different voltage levels with a primarily clocked blocking-oscillator type converter, wherein the primary winding (51) of a transformer (5) is connected in series with a first transistor (1) and its secondary winding (52) is connected in series with the accumulator (61) and with a first diode (31), the base of the first transistors (1) being not only connected through a first capacitor (11), to the one end of the secondary winding (52) of the transformer (5), the other end of the winding being connected to the accumulator (61), but also being connected through a first resistor (21) to the one pole of the input voltage source and to the collector of a second transistor (2), the emitter of which is connected to earth potential, and wherein the emitter of the first transistor (1) is not only connected through a second resistor (22) and the accumulator (61) to earth potential but also is connected through a zener diode (41) to the base of the second transistor (2), and wherein further the base of the first transistor (1) is connected through a feedback resistor (27) to the first capacitor (11) and connected to the junction of the feedback resistor (27) with the first capacitor (11) is a discharge circuit (7) which is connected to the accumulator (61), and through which the charge of the first capacitor (11), charged during the conducting phase of the first transistor (1), flows away during the blocking phase of the first transistor (1) and which reverses the charge of the first capacitor (11), likewise in the blocking phase of the first transistor (1), to a positive voltage at the terminal connected to the feedback resistor (27).

2. An electronic switching power supply according to claim 1, characterised in that the discharge circuit (7) consists of the series connection of a discharge resistor (72) connected to the accumulator (61) and a discharge diode (71) connected to the first capacitor (11) at the cathode side (Fig. 2).

3. An electronic switching power supply according to claim 1, characterised in that the discharge circuit (7) consists of the series connection of a discharge resistor (72) and a discharge diode (71) connected to the first capacitor (11) at the cathode side, that the discharge resistor (72) is connected to the collector of a third transistor (3), the emitter of which is connected to the accumulator (61), the base of which is connected not only through a third resistor (23) on the one hand through a second diode (32) to the one end of the secondary winding (52) of the transformer (5) and on the other hand through a third diode (33) to the base of the first transistor (1) but also through a fifth resistor (25) and a fifth diode (35) connected to the fifth resistor (25) at the cathode side to the accumulator (61) and the collector of which is connected through a fourth resistor (24) to the base of the second transistor (2).

4. An electronic switching power supply according to claim 2 or 3, characterised in that a light-emitting diode (10) connected, at the cathode side, to the anode of the discharge diode (71), is provided in parallel with the discharge resistor (72).

5. An electronic switching power supply according to one of the preceding claims, characterised in that the emitter of the first transistor (1) is connected, through the second resistor (22), to a tap of the secondary winding (52) of the transformer (5) (Fig. 3).

## Revendications

1. Alimentation à commutation électronique pour l'alimentation en courant d'un accumulateur (61) et d'un consommateur électrique (62) pouvant être connecté en parallèle, à partir d'une source de tension alternative ou continue de différentes valeurs de tension, avec un convertisseur à blocage à commande de cadence au primaire, dans lequel l'enroulement primaire (51) d'un transformateur (5) est connecté en série avec un premier transistor (1), et dont l'enroulement secondaire (52) est connecté en série avec l'accumulateur (61) et une première diode (31), la base du premier transistor (1) se trouvant en liaison par l'intermédiaire d'un premier condensateur (11) avec une des extrémités de l'enroulement secondaire (52) du transformateur, dont l'autre extrémité d'enroulement est reliée à l'accumulateur (61), aussi bien qu'étant reliée par l'intermédiaire d'une première résistance (21) à l'un des pôles de la source de tension d'entrée et au collecteur d'un second transistor (2), dont l'émetteur est ramené au potentiel de masse, et l'émetteur du premier transistor (1) étant relié par l'intermédiaire d'une seconde résistance (22) et de l'accumulateur (61) au potentiel de masse, aussi bien qu'étant raccordé par l'intermédiaire d'une diode de Zener (41) à la base du second transistor (2), et la base du premier transistor (1) étant reliée par l'intermédiaire d'une résistance de réaction (27) au premier condensateur (11) et à la jonction de la résistance de réaction (27) avec le premier condensateur (11) est raccordé un circuit de décharge (7) relié à l'accumulateur (61), par l'intermédiaire duquel s'écoule la charge du premier condensateur (11) chargé pendant la phase conductrice du premier transistor (1), au cours de la phase de blocage du premier transistor (1) et qui recharge le premier condensateur (11), également au cours de la phase de blocage du premier transistor (1), à une tension positive à la connexion reliée à la résistance de réaction (27).

2. Alimentation à commutation électronique suivant la revendication 1, caractérisée en ce que le circuit de décharge (7) est constitué par le montage série d'une résistance de décharge (72) reliée à l'accumulateur (61), avec une diode de décharge (71) reliée côté cathode au premier condensateur (11) (figure 2).

3. Alimentation à commutation électronique suivant la revendication 1, caractérisée en ce que le circuit de décharge (7) est constitué par le montage série d'une résistance de décharge (72) avec une diode de décharge (71) reliée côté cathode au premier condensateur (11), en ce que la résistance de décharge (72) est reliée au collecteur d'un trosième transistor (3), dont l'émetteur est raccordé à l'accumulateur (61), dont la base est reliée par l'intermédiaire d'une troisième résistance (23), d'une part par une seconde diode (32), à l'une des extrémités de l'enroulement secondaire (52) du transformateur (5) et, d'autre part par une troisième diode (33), à la base du premier transistor (1), aussi bien que par l'intermédiaire d'une cinquième résistance (25) et d'une cinquième diode (35) reliée côté cathode à la cinquième résistance (25), à l'accumulateur (61), et dont le collecteur est relié par l'intermédiaire d'une quatrième résistance (24) à la base du second transistor (2).

4. Alimentation à commutation électronique suivant la revendication 2 ou 3, caractérisée en ce qu'en parallèle avec la résistance de décharge (72) est prévue une diode électro-luminescente (10) reliée côté cathode à l'anode de la diode de décharge (71).

5. Alimentation à commutation électronique suivant l'une des revendications précédentes, caractérisée en ce que l'émetteur du premier transistor (1) est raccordée, par l'intermédiaire de la seconde résistance (22), à une prise intermédiaire de l'enroulement secondaire (52) du transformateur (5) (figure 3).

FIG.1

FIG.2

FIG.3

0 095 072